# EUROPÄISCHE PATENTSCHRIFT

(11) **EP 2 994 439 B1**
(45) Veröffentlichungstag und Bekanntmachung des Hinweises auf die Patenterteilung: **29.07.2020**
(21) Anmeldenummer: 14724677.1
(22) Anmeldetag: 06.05.2014
(51) Int. Cl.: C04B 28/02, C04B 28/06, C04B 40/06, C04B 111/76

(54) **VERWENDUNGEN EINES MINERALISCHEN, HYDRAULISCHEN PULVERFÖRMIGEN BINDEMITTELS**
USES OF A MINERALIC HYDRAULIC POWDEROUS BINDER
UTILISATION D'UN LIANT HYDRAULIQUE MINÉRALIQUE PULVÉRULANT

(30) Priorität: 07.05.2013 DE 102013007937
(43) Veröffentlichungstag der Anmeldung: 16.03.2016
(73) Patentinhaber: Franken Maxit Mauermörtel GmbH & Co., 95359 Kasendorf (DE); Johann Bergmann GmbH & Co., 95359 Azendorf (DE)
(72) Erfinder: SCHARFE, Friedbert, 95359 Kasendorf (DE); GROPPWEIS, Sebastian, 95349 Thurnau (DE)
(74) Vertreter: Patent- und Rechtsanwälte Dr. Solf & Zapf
(86) Internationale Anmeldenummer: PCT/EP2014/059260
(87) Internationale Veröffentlichungsnummer: WO 2014/180859

(56) Entgegenhaltungen:
- WO-A1-2012/127066
- WO-A1-2013/086722
- CN-A- 101 508 546
- DE-B- 1 229 434
- DE-C- 738 394
- JP-A- H01 299 913
- KR-A- 20070 088 975
- KR-B1- 100 991 234
- KR-B1- 101 031 980

## Beschreibung

Die Erfindung betrifft die Verwendung eines mineralischen, hydraulischen Bindemittels.

Mineralische, hydraulische Bindemittel wie z. B. Zement und hydraulischer Kalk sind pulverförmige Stoffe, die durch Zugabe von Anmachwasser einen Bindemittelleim bilden, der an der Luft und unter Wasser abbindet und erstarrt und zu einem festen steinartigen, wasserbeständigen Stoff erhärtet.

Aus diesen Bindemitteln werden Verbundwerkstoffe hergestellt, indem dem Bindemittel zumindest ein mineralischer Zuschlagstoff zugegeben wird. Durch Zugabe von Sand als Zuschlagstoff in der Regel mit Korndurchmessern bis 4 mm werden mineralische hydraulische Trockenmörtel erzeugt. Durch Zugabe von Sand und Kies od. dgl. i.d.R. mit Korndurchmessern > 4 mm wird mineralischer Beton erzeugt.

Mörtel werden i.d.R. zur Errichtung von Mauerwerk oder als Fliesenkleber od. zum Ankleben von Fassadenelementen und dgl. verwendet. Aus Beton werden z. B. Wände oder Betonsteine hergestellt.

Unter den Begriff "Mörtel" sollen im Rahmen der Erfindung insbesondere Mauermörtel, Putzmörtel, Estrichmörtel, Klebe- und Armierungsmörtel verstanden werden.

Die Mörtel und Betone enthalten i.d.R. noch Zusatzstoffe und Zusatzmittel. Die Zusatzstoffe sind feingemahlene Zusätze, wie z. B. Baukalke, Gesteinsmehle, Trass oder Pigmente. Zusatzmittel sind Zusätze, die die Mörtel- bzw. Betoneigenschaften durch chemische oder physikalische Wirkungen ändern, wie z. B. Luftporenbildner, Verflüssiger, Dichtungsmittel, Erstarrungsbeschleuniger, Erstarrungsverzögerer, Erhärtungsbeschleuniger, Erhärtungsverzögerer oder Haftvermittler.

Der Fachmann auf dem Sachgebiet kennt die Technologie und die mineralischen Werkstoffe sowie die Zusatzstoffe und Zusatzmittel. Eine detailliertere Beschreibung ist im Rahmen der vorliegenden Erfindung daher nicht erforderlich.

Die mit Anmachwasser aus Trockenmörteln angemachten Mörtel werden Frischmörtel genannt und die mit Anmachwasser aus entsprechenden Trockengemischen angemachten Betone Frischbeton. Beide werden im Folgenden auch Frischmassen genannt. Frischmassen binden ab, wenn die chemische Reaktion des Bindemittels mit Wasser beginnt. Sie erstarren danach infolge von Gelbildungen und erhärten infolge von Kristallisierungen.

Die Erfindung befasst sich mit dem Sachgebiet der hydraulischen, mineralischen Bindemittel in Form von Zementen und hydraulischen, mineralischen Trockenmörteln und Betonen, die als mineralische, hydraulische Bindemittel einen Zement aufweisen. Im Rahmen der Erfindung wird unterschieden zwischen mineralischen, hydraulisch erhärtenden Zementen und Baukalken sowie Gips; letztere sind keine Zemente im Sinne der vorliegenden Erfindung.

Mineralische hydraulische Zemente, mineralische hydraulische Trockenmörtel sowie mineralische hydraulische Putze sind genormt. Diese Normen kennt der Fachmann auf dem Sachgebiet. Die Normen beziehen sich im Wesentlichen auf die Zusammensetzungen aus bestimmten Komponenten und auf Festigkeitsentwicklungen.

Problematisch ist, dass mineralische, hydraulische Bindemittel in Frischmassen bei Einwirkung von tiefen Temperaturen von z. B. unter 5° C zu langsam abbinden, erstarren und erhärten, die gewünschten Festigkeiten nicht erbringen oder sogar gar nicht erstarren oder erhärten und von daher unbrauchbar sind. Ab welcher niedrigen Temperatur ein Abbinden, Erstarren oder Erhärten beeinträchtigt wird, ist abhängig vom Bindemitteltyp. Es gibt insoweit keine präzisen Vorschriften. Die DIN 1053-1 schreibt zwar vor, was beim Mauern bei Frost zu beachten und verboten ist, nicht aber bei welchen niedrigen Temperaturen ein Bindemittel nicht mehr verwendet werden darf.

Auf dem Markt werden sogenannte Tieftemperatur-Spezialmörtel bzw. sogenannte Wintermörtel, z. B. in Kartuschen abgepackt, angeboten, die angeblich bis -6° C verarbeitbar sind. Meist aber beinhaltet der Begriff "Wintermörtel" nur, dass die Rezeptur gegen die Rezeptur des ansonsten gelieferten "Sommermörtels" etwas abgeändert ist, gibt aber keine Gewähr dafür, dass der Mörtel bei Minustemperaturen, also bei Frost, ebenso erhärtet wie bei Plustemperaturen. In der Regel enthalten die Wintermörtel Polymerbindemittel, u. a. auch im Gemisch mit hydraulischen Bindemitteln. Letztere werden als Hybridmörtel bezeichnet, z. B. Vinylester-Hybridmörtel. Für das Mauern oder Betonieren bei Frost sind diese Mörtel aber auch nicht unbedingt geeignet.

Aus der DE-PS 738 394 ist bekannt, ungelöschten Kalk einer Zementmörtelmischung zuzusetzen. Der Kalk soll beim Ablöschen Wärme entwickeln, so dass die Erhärtung einer Frischmasse aus diesem Bindemittel bei tiefen Temperaturen unbeeinträchtigt abläuft.

Die WO 2012/127066 A1 offenbart eine trockene zementäre Mischung, die ein hydraulisches Bindemittel in Form von Calciumaluminatzement und/oder Calciumsulfoaluminatzement aufweist. Die zementäre Mischung kann Zuschlagstoffe und/oder Zusatzstoffe und/oder Zusatzmittel und zudem als photokatalytische Substanz Zinkoxid enthalten. Sie dient zur Herstellung von Frischmörteln oder Frischbetonen für Gebäude.

Aufgabe der Erfindung ist, ein mineralisches, hydraulisches Bindemittel zu schaffen, das bei Verwendung in Frischmassen bei Frost ebenso abbindet, erstarrt und erhärtet wie bei Plustemperaturen.

Diese Aufgabe wird durch die Merkmale des Anspruchs 1 gelöst. Vorteilhafte Weiterbildungen der Erfindung werden in den von Anspruch 1 abhängigen Unteransprüchen gekennzeichnet.

Die Erfindung beruht auf einer Auswahl eines mineralischen, hydraulischen Spezialzement-Klinkermehls in Form eines Calciumsulfoaluminatzementklinkermehls plus mindestens einem in einem wässrigen Milieu einer Frischmasse basisch wirkenden, an sich bekannten Reaktionsanreger dafür, kombiniert mit mindestens einer Zinkkomponente, die in einem wässrigen Milieu einer Frischmasse Zinkionen liefert. Diese Kombination gewährleistet in überraschender Weise, dass das mineralische hydraulische Bindemittel bei Plustemperaturen und bei Frost bei erfindungsgemäßer Verwendung in einer Frischmasse gleichermaßen abbindet, erstarrt und erhärtet und dabei vergleichbare oder nur unbedeutend geringere Frühfestigkeiten und Endfestigkeiten erbringt, wobei meist sogar die Erstarrungs- und Erhärtungsdauer gleich oder nahezu gleich ist.

Die Anreger für das hydraulische Abbinden der Calciumsulfoaluminatklinkermehle sind bekannt. In der Regel werden im wässrigen Milieu alkalisch wirkende Stoffe, z. B. Alkali- und/oder Erdalkalisulfate, z. B. Gips, Gips-Halbhydrat und/oder Gips-Anhydrit, und/oder Alkali- und/oder Erdalkalihydroxide wie z. B. Calciumhydroxid eingesetzt. Das Calciumsulfoaluminatzementklinkermehl plus Anreger ist als Calciumsulfoaluminatzement auf dem Markt erhältlich. Das erfindungsgemäß verwendete Bindemittel enthält mindestens einen Anreger. Calciumsulfoaluminatklinkerzementmehle und Calciumsulfoaluminatzemente, die für die Zwecke der Erfindung verwendbar sind, werden z. B. in der WO 2013/023728 A2 beschrieben. In diesem Dokument sind auch weitere zum Stand der Technik zählende, erfindungsgemäß verwendbare Calciumsulfoaluminatzemente angegeben. Calciumsulfoaluminatzemente werden auch in ZKG International No. 12-2009, Seite 42 bis 53, beschrieben. Diese Spezialzemente zeichnen sich insbesondere dadurch aus, dass sie im Vergleich zu Portlandzement schnellere Anfangsreaktionen und höhere Festigkeiten erreichen können.

Bekannt ist, Calciumsulfoaluminatzemente zur Herstellung einer Quellkomponente zu verwenden (DE 101 49 008 A1). Gemäß DE 197 33 854 A1 wird Calciumsulfoaluminatzement mit CaSO₄, Ca(OH)₂ oder CaO und Fe₂O₃ kombiniert, um eine helle Eigenfarbe zu erzielen. Nach der DE-PS 660 268 wird Portlandzement mit Sulfoaluminaten kombiniert, um das Schwinden des Portlandzements zu kompensieren. Die DE 10 2010 034 874 B4 beschreibt eine mineralische Bindemittelzusammensetzung aus Puzzolan, Calciumsulfoaluminat und Gips-Halbhydrat und/oder Gips-Anhydrit, die es ermöglicht, Baukörper mit hoher mechanischer Belastbarkeit herzustellen. Die DE 101 09 841 C1 befasst sich mit Trockenmörteln aus normalem Zement, wie Portlandzement, redispergierbarem Polymerpulver und einer Zinkkomponente. Der Zusatz der Zinkkomponente soll im Vergleich zu üblicher Weise verwendeten Verzögerern die Abbindung des Zements wirksam verzögern und dabei eine Verarbeitbarkeit über mehrere Tage gewährleisten.

Es liegt im Rahmen der Erfindung, den Spezialzement, nämlich den Calciumsulfoaluminatzement, mit mindestens einem normalen, genormten Zement nach DIN EN 197-1, z. B. mit Portlandzement, zu mischen.

Als Zinkkomponente wird insbesondere mindestens eine Verbindung aus der Gruppe Zinkoxid, Zinkhydroxid, Zinkhydroxidcarbonat verwendet. Z. B. kann aber auch mindestens eine Verbindung der folgenden Gruppe verwendet werden: Zinkacetat, Zinkcarbonat, Zinkfluorid, Zinknitrat, Zinknitrid, Zinkphosphat, Zinkphosphid, Zinkstearat, Zinksulfat, Zinksulfid.

Bevorzugte Zusammensetzungen des erfindungsgemäß verwendeten Bindemittels in Gew.-% ergeben sich aus folgenden Angaben:

| | |
|---|---|
| Calciumsulfoaluminatklinkermehl: | : 90 bis 99,98, insbesondere 97 bis 99,8 |
| Anregerkomponente | : 0,01 bis 5, insbesondere 0,1 bis 1 |
| Zinkkomponente | : 0,01 bis 5, insbesondere 0,1 bis 2 |

Vorzugsweise wird aus dem erfindungsgemäß verwendeten Bindemittel, insbesondere mit obiger Zusammensetzung, ein Werktrockenmörtel hergestellt und dieser in einem Frischmörtel oder Frischbeton verwendet, wobei der Werktrockenmörtel insbesondere folgende Zusammensetzung in Gew.-% aufweist:

| | |
|---|---|
| Erfindungsgemäß verwendetes Bindemittel: | 5 bis 95, insbesondere 10 bis 90 |
| Zuschlagstoff: | 5 bis 95, insbesondere 10 bis 90 |
| Zusatzstoff: | 0 bis 50, insbesondere 1 bis 40 |
| Verdickungsmittel: | 0 bis 5, insbesondere 0,1 bis 4 |
| Redispergierbares Polymerpulver: | 0 bis 5, insbesondere 1 bis 3 |
| Erstarrungsverzögerer: | 0 bis 3, insbesondere 0,1 bis 2 |
| Erhärtungsverzögerer: | 0 bis 4, insbesondere 0,1 bis 2 |
| Erstarrungsbeschleuniger: | 0 bis 6, insbesondere 0,1 bis 5 |
| Erhärtungsbeschleuniger: | 0 bis 6, insbesondere 0,1 bis 5 |
| Fließmittel: | 0 bis 4, insbesondere 0,1 bis 2 |

Die Zusatzstoffe und Zusatzmittel im verwendeten Werktrockenmörtel beeinträchtigen das Abbinden, Erstarren und Erhärten der Frischmörtel bei Frost und Plustemperaturen nicht.

Zuschlagstoffe für mineralische, hydraulische erfindungsgemäße Mörtel sind natürliche oder industriell hergestellte oder rezyklierte Gesteinskörnungen, die für die erfindungsgemäßen Mörtel mit normalen üblichen Kornverteilungen, z. B. Gauß'schen Kornverteilungen, oder bestimmten Kornbändern mit maximaler Korngröße bis z. B. 4 mm und mit bestimmten Kornrohdichten zwischen 0,3 kg/dm³ und 3 kg/dm³ verwendet werden.

Beispiele für natürliche Gesteinskörnungen sind Quarz-, Kalkstein-, Sandstein-, Porphyr-, Granit-, Basalt-, Grauwacken-, Gneissande. Beispiele für künstliche Gesteinskörnungen sind Hüttensande, Schlacken und rezyklierte Beton- oder Mörtelkörnungen. Weitere verwendbare Gesteinskörnungen sind der Norm DIN EN 13139 "Gesteinskörnungen für Mörtel" zu entnehmen.

Die Zuschlagstoffe gewährleisten insbesondere die gewünschten Festigkeiten des erhärteten Mörtels.

Zusatzstoffe für mineralische, hydraulische, erfindungsgemäß verwendete Mörtel sind mineralische Mehle mit normalen üblichen Kornverteilungen, z. B. Gauß'schen Kornverteilungen, oder bestimmten Kornbändern und maximalen Korngrößen bis z. B. 0,1 mm.

Beispiele für Zusatzstoffe sind Mehle aus Quarz, Kalkstein, Dolomitstein, Ton, Talkum, Glimmer oder auch Mehle aus Bims, Schaumglas, Porenbeton, Perlit, Vermiculit.

Die Zusatzstoffe verbessern die Verarbeitbarkeit des Frischmörtels und gewährleisten ein dichteres Gefüge des erhärteten sogenannten "Festmörtels".

In erfindungsgemäß verwendeten Mörteln wird mindestens ein Zuschlagstoff verwendet. Die Verwendung von Zusatzstoffen ist optional, wobei im Falle der Verwendung mindestens ein Zusatzstoff verwendet wird.

Verdickungsmittel, von denen in den erfindungsgemäß verwendeten Mörteln mindestens eines in Pulverform verwendet wird, verbessern im hydraulischen Frischmörtel die Rheologie, insbesondere die Verarbeitbarkeit. Beispiele für Verdickungsmittel sind Polysaccharide wie Celluloseether und modifizierte Celluloseether, Stärkeether, Guar Gum oder Xanthan Gum, Schichtsilikate, Polycarbonsäuren wie Polyacrylsäure und deren Teilester, Polyvinylalkohole, welche ggf. acetalisiert und/oder hydrophob modifiziert sein können, Casein und assoziativ wirkende Verdicker. Bevorzugt werden die Celluloseether, die modifizierten Celluloseether, die Polyvinylalkohole, welche ggf. acetalisiert und/oder hydrophob modifiziert sein können, sowie deren Gemische.

Redispergierbare Polymerpulver verleihen dem mineralischen, hydraulischen, Festmörtel verbesserte Haftfestigkeit, verbesserte Biegefestigkeit und verbesserte Stoßfestigkeit und gewährleistet eine geringere Wasseraufnahme des erhärteten Festmörtels. Besonders geeignete redispergierbare Polymerpulver werden in der DE 697 00 692 T2 beschrieben. Weitere geeignete redispergierbare Polymerpulver für erfindungsgemäß verwendete Mörtel sind solche auf der Basis von einem oder mehreren Monomeren aus der Gruppe umfassend Vinylester von unverzweigten oder verzweigten Alkylcarbonsäuren mit 1 bis 15 C-Atomen, Methacrylsäureester und Acrylsäureester von Alkoholen mit 1 bis 10 C-Atomen, Vinylaromaten, Olefine, Diene und Vinylhalogenide.

Zudem werden geeignete redispergierbare Polymerpulver in der DE 101 09 841 C2 angegeben.

Die redispergierbaren Polymerpulver zerfallen in Wasser in Primärteilchen, die dann im Wasser dispergieren. In erfindungsgemäßen Mörteln wird optional mindestens ein redispergierbares Polymerpulver verwendet.

"Optional mindestens ein" bedeutet, dass der Stoff optional verwendet wird, und wenn er verwendet wird, davon mindestens ein Stoff eingesetzt wird.

In den erfindungsgemäß verwendeten Trockenmörteln kann optional mindestens ein pulverförmiger Erstarrungsverzögerer für das erfindungsgemäße Spezial-Bindemittel verwendet werden. Hierfür eignen sich insbesondere Fruchtsäuren, wie Weinsäure, Zitronensäure, Oxalsäure. Diese Verzögerer wirken synergistisch mit der Zinkkomponente, indem sie das Erstarren und ggf. auch das Erhärten des Mörtels bei tiefen Temperaturen, insbesondere bei Frost, noch verbessern, weshalb sie dafür nach einer Ausführungsform der Erfindung und in Kombination mit der Zinkkomponente eingesetzt werden.

Beispiele für weitere Erstarrungsverzögerer für das erfindungsgemäß verwendete Spezial-Bindemittel bzw. für die erfindungsgemäß verwendeten Mörtel sind üblicherweise zu diesem Zweck verwendete Polyphosphate.

Des Weiteren können die erfindungsgemäß verwendeten Trockenmörtel optional mindestens einen an sich bekannten Erstarrungsbeschleuniger aufweisen, insbesondere wenn ein verzögertes Erstarren nicht erwünscht ist. Diese sind z. B. üblicherweise zu diesem Zweck verwendete Formiate, Nitrate, Sulfite.

In den erfindungsgemäß verwendeten Mörteln wird optional mindestens ein Erhärtungsbeschleuniger verwendet. Diese sind z. B. üblicherweise zu diesem Zweck verwendete Nitrate, Nitrite, Formiate, Aluminate, Silikate oder Hydroxide im Gemisch mit Glycolen wie Glycerin oder Ethylenglycol.

In den erfindungsgemäß verwendeten Mörteln wird optional mindestens ein Fließmittel verwendet. Fließmittel, die für die erfindungsgemäß verwendeten Trockenmörtel geeignet sind, sind ebenfalls pulverförmig. Sie ermöglichen den normalerweise für die Verarbeitbarkeit erforderlichen Wassergehalt des Frischmörtels zu reduzieren und verbessern die Verarbeitbarkeit des Frischmörtels. Beispiele für Fließmittel sind Fließmittel auf Basis von üblicherweise zu diesem Zweck verwendete Melamine, Lignine, Naphthaline, Polycarboxylate, Hydroxycarbonsäuren.

Die Erfindung betrifft auch die Verwendung des Bindemittels und des Trockenmörtels für einen mineralischen Frischbeton, aufweisend mindestens einen Zuschlagstoff und optional übliche Zusatzstoffe und Zusatzmittel in Mengen, die für Frischbetone üblich sind.

Die Erfindung wird im Folgenden beispielhaft verdeutlicht.

Es wurde nach DIN EN 1015-11 (Mai 2007) die Festmörtel-Festigkeitsentwicklung von in Formen genormt hergestellten Mörtelprüfkörpern (Prismen 40 mm x 40 mm x 160 mm) anhand der Biegezug- und Druckfestigkeit ermittelt.

Als Bindemittel wurde ein handelsüblicher Calciumsulfoaluminatzement (im Folgenden CSA-pur genannt) und ein Bindemittel aus dem handelsüblichen Calciumsulfoaluminatzement plus 0,2 Gew.-% ZnO (im Folgenden CSA-ZnO genannt) verwendet.

Die folgende Tabelle enthält die Ergebnisse.

**Tabelle I: Ergebnis der Untersuchungen zur Entwicklung der Druck- und Biegezugfestigkeit nach DIN EN 1015-11 des CSA-ZnO-Mörtels bei unterschiedlichen Lagerungsbedingungen**

| **Prüfserie: 28d bei 15°C und 65 % rel. Feuchte** | | | | | | | | | | | | | | | |
|---|---|---|---|---|---|---|---|---|---|---|---|---|---|---|---|
| Prüfalter | | | | | | | | | | | | | | | |
| 7d | | | | 14d | | | | 21d | | | | 28d | | | |
| ρ_{FM} | β_{BZ} | β_{D} | | ρ_{FM} | β_{BZ} | β_{D} | | ρ_{FM} | β_{BZ} | β_{D} | | ρ_{FM} | β_{BZ} | β_{D} | |
| 1,26 | 2,77 | 21,3 | 21,8 | 1,2 4 | 3,1 4 | 22, 2 | 21, 7 | 1,2 6 | 3,0 5 | 25, 1 | 24, 2 | 1,2 7 | 2,9 5 | 23, 3 | 26, 2 |
| 1,25 | 3,38 | 21,6 | 20,9 | 1,2 3 | 2,8 1 | 22, 7 | 23, 0 | 1,2 6 | 3,1 9 | 23, 8 | 23, 6 | 1,2 9 | 3,1 4 | 26, 6 | 26, 2 |
| 1,27 | 3,09 | 23,4 | 22,8 | 1,2 5 | 2,9 1 | 22, 6 | 22, 5 | 1,2 7 | 3,0 5 | 23, 5 | 22, 7 | 1,2 7 | 2,8 1 | 25, 7 | 26, 4 |

| **Mittelwerte** | | | | **Mittelwerte** | | | | **Mittelwerte** | | | | **Mittelwerte** | | | |
|---|---|---|---|---|---|---|---|---|---|---|---|---|---|---|---|
| **1,26** | **3,08** | **22,0** | | **1,2 4** | **2,9 5** | **22,4** | | **1,2 6** | **3,0 9** | **23,8** | | **1,2 8** | **2,9 7** | **25,6** | |
| | | | | | | | | | | | | | | | |

| **Prüfserie: 7d Lagerung bei -10°C, anschließend bei 20°C/65 % rel. Feuchte** | | | | | | | | | | | | | | | |
|---|---|---|---|---|---|---|---|---|---|---|---|---|---|---|---|
| Prüfalter | | | | | | | | | | | | | | | |
| 7d | | | | 14d | | | | 21d | | | | 28d | | | |
| ρ_{FM} | β_{BZ} | β_{D} | | ρ_{FM} | β_{BZ} | β_{D} | | ρ_{FM} | β_{BZ} | β_{D} | | ρ_{FM} | β_{BZ} | β_{D} | |
| 1,34 | 2,34 | 22,8 | 22,0 | 1,3 1 | 2,7 2 | 27, 1 | 26, 8 | 1,3 0 | 2,8 6 | 24, 6 | 24, 7 | 1,2 4 | 2,3 9 | 19, 2 | 20, 6 |
| 1,35 | 2,58 | 21,9 | 23,6 | 1,3 3 | 2,4 4 | 27, 6 | 26, 3 | 1,3 0 | 2,9 5 | 25, 4 | 25, 1 | 1,2 4 | 2,7 2 | 22, 1 | 21, 8 |
| 1,34 | 2,48 | 23,2 | 21,7 | 1,3 2 | 2,2 5 | 26, 6 | 27, 0 | 1,2 8 | 2,3 9 | 24, 6 | 24, 6 | 1,2 4 | 2,3 4 | 21, 5 | 21, 4 |

| **Mittelwerte** | | | | **Mittelwerte** | | | | **Mittelwerte** | | | | **Mittelwerte** | | | |
|---|---|---|---|---|---|---|---|---|---|---|---|---|---|---|---|
| **1,34** | **2,47** | **22,5** | | **1,3 2** | **2,4 7** | **26,9** | | **1,2 9** | **2,7 3** | **24,8** | | **1,2 4** | **2,4 8** | **21,1** | |
| | | | | | | | | | | | | | | | |

| **Prüfserie: Dauerfrostlagerung bei -10°C** | | | | | | | | | | | | | | | |
|---|---|---|---|---|---|---|---|---|---|---|---|---|---|---|---|
| Prüfalter | | | | | | | | | | | | | | | |
| 7d | | | | 14d | | | | 21d | | | | 28d | | | |
| ρ_{FM} | β_{BZ} | β_{D} | | ρ_{FM} | β_{BZ} | β_{D} | | ρ_{FM} | β_{BZ} | β_{D} | | ρ_{FM} | β_{BZ} | β_{D} | |
| 1,32 | 2,58 | 21,9 | 21,9 | 1,3 1 | 2,3 4 | 20, 1 | 22, 5 | 1,3 1 | 2,3 4 | 20, 2 | 20, 1 | 1,3 2 | 2,4 8 | 20, 4 | 20, 1 |
| 1,33 | 2,77 | 22,5 | 22,2 | 1,3 2 | 1,9 2 | 21, 9 | 21, 7 | 1,3 2 | 2,1 1 | 19, 5 | 20, 4 | 1,3 2 | 2,3 9 | 20, 8 | 21, 7 |
| 1,32 | 2,58 | 21,8 | 22,3 | 1,3 2 | 1,8 3 | 22, 5 | 22, 8 | 1,3 2 | 2,1 1 | 21, 0 | 20, 6 | 1,3 2 | 2,3 4 | 21, 5 | 21, 0 |

| **Mittelwerte** | | | | **Mittelwerte** | | | | **Mittelwerte** | | | | **Mittelwerte** | | | |
|---|---|---|---|---|---|---|---|---|---|---|---|---|---|---|---|
| **1,32** | **2,64** | **22,1** | | **1,3 2** | **2,0 3** | **21,9** | | **1,3 2** | **2,1 9** | **20,3** | | **1,3 2** | **2,4 1** | **20,9** | |
| ρ_{FM} = Festmörtelrohdichte in [kg/dm³] | | | | | | | | | | | | | | | |
| β_{BZ} = Biegezugfestigkeit in [N/mm²] | | | | | | | | | | | | | | | |
| β_{D} = Druckfestigkeit in [N/mm²] | | | | | | | | | | | | | | | |

**Tabelle II: Ergebnis der Untersuchungen zur Entwicklung der Druck- und Biegezugfestigkeit nach DIN EN 1015-11 des CSA-Mörtels.**

| **Prüfserie: 28d bei 15°C und 65 % rel. Feuchte** | | | | | | | | | | | |
|---|---|---|---|---|---|---|---|---|---|---|---|
| Prüfalter | | | | | | | | | | | |
| 7d | | | 14d | | | 21d | | | 28d | | |
| ρ_{FM} | β_{BZ} | β_{D} | ρ_{FM} | β_{BZ} | β_{D} | ρ_{FM} | β_{BZ} | β_{D} | ρ_{FM} | β_{BZ} | β_{D} |
| 1,34 | 4,10 | 23,90 | 1,13 | 3,10 | 25,61 | 1,34 | 3,21 | 26,10 | 1,31 | 3,30 | 27,60 |
| | | | | | | | | | | | |

| **Prüfserie: 7d Lagerung bei -10°C, anschließend bei 20°C/65 % rel. Feuchte** | | | | | | | | | | | |
|---|---|---|---|---|---|---|---|---|---|---|---|
| Prüfalter | | | | | | | | | | | |
| 7d | | | 14d | | | 21d | | | 28d | | |
| ρ_{FM} | β_{BZ} | β_{D} | ρ_{FM} | β_{BZ} | β_{D} | ρ_{FM} | β_{BZ} | β_{D} | ρ_{FM} | β_{BZ} | β_{D} |
| 1,31 | 0,81 | 2,60 | 1,13 | 0,90 | 2,83 | 1,25 | 0,91 | 2,84 | 1,22 | 1,01 | 2,91 |
| | | | | | | | | | | | |

| **Prüfserie: Dauerfrostlagerung bei -10°C** | | | | | | | | | | | |
|---|---|---|---|---|---|---|---|---|---|---|---|
| Prüfalter | | | | | | | | | | | |
| 7d | | | 14d | | | 21d | | | 28d | | |
| ρ_{FM} | β_{BZ} | β_{D} | ρ_{FM} | β_{BZ} | β_{D} | ρ_{FM} | β_{BZ} | β_{D} | ρ_{FM} | β_{BZ} | β_{D} |
| 1,31 | 0,52 | 1,52 | 1,30 | 0,69 | 1,76 | 1,32 | 0,72 | 1,82 | 1,31 | 0,76 | 1,88 |
| | | | | | | | | | | | |
| ρ_{FM} = Festmörtelrohdichte in [kg/dm³] | | | | | | | | | | | |
| β_{BZ} = Biegezugfestigkeit in [N/mm²] | | | | | | | | | | | |
| β_{D} = Druckfestigkeit in [N/mm²] | | | | | | | | | | | |

Aus obigen Tabellen I und II ergibt sich ohne weiteres, dass durch einen Zusatz von ZnO zu einem Calciumsulfoaluminatzement die Verwendung des Calciumsulfoaluminatzements bei Frost bis zumindest -10° C möglich ist und nicht bezüglich Festigkeit beeinträchtigt wird. Gleiches gilt für einen Zusatz anderer, Zinkionen in einem wässrigen Milieu liefernder Zinkkomponenten. Dies braucht für den Fachmann nicht weitergehend nachgewiesen zu werden, weil für ihn klar ist, dass es die Zinkionen im wässrigen Milieu sind, die die Verwendbarkeit bei Frost bewirken. Auch ist es für den Fachmann nicht erforderlich nachzuweisen, dass übliche Zusatzstoffe und Zusatzmittel das Frostverhalten nicht negativ beeinflussen, weil für den Fachmann klar ist, dass das Abbinden und das Erhärten der Minerale des Calciumsulfoaluminatzements, die die Festigkeitsentwicklung der mineralischen Reaktionsphasen des Calciumsulfoaluminatzements bewirken, nicht maßgeblich durch diese Mittel verändert werden kann. Die Erfindung betrifft auch die Verwendung des erfindungsgemäß verwendeten Bindemittels in einem Frischbetone, der bis auf das Bindemittel zwingend übliche Zuschlagstoffe und optional z. B. die für die Trockenmörtel genannten Zusatzstoffe und Zusatzmittel aufweist in Mengen, die für Betone üblich sind.

Die Erfindung betrifft somit die Verwendung eines mineralischen, hydraulischen Bindemittels in Pulverform auf Basis eines Calciumsulfoaluminatklinkermehls, zugesetzt enthaltend mindestens eine in einem wässrigen Milieu alkalisch wirkende Anregerkomponente für die hydraulische Reaktion des Calciumsulfoaluminats des Klinkermehls und mindestens eine Zinkionen in einem wässrigen Milieu freisetzende Zinkkomponente und optimal auch mindestens einen Erstarrungsverzögerer für das Calciumsulfoaluminat z. B. mindestens eine erstarrungsverzögernde Fruchtsäure, wie Weinsäure, Zitronensäure, Oxalsäure und/oder mindestens ein erstarrungsverzögerndes Polyphosphat, wobei die Komponenten so zusammengestellt sind, dass das Bindemittel bei Frost und Plustemperaturen in einem wässrigen Milieu gleichermaßen abbindet, erstarrt und erhärtet.

Besonders vorteilhaft ist, wenn das Calciumsulfoaluminat ein den Anreger bereits enthaltender Calciumsulfoaluminatzement ist.

Des Weiteren ist vorteilhaft, wenn die Anregerkomponente ausgewählt ist aus der Gruppe Erdalkalisulfate, Erdalkalihydroxide, Alkalisulfate, Alkalihydroxide.

Die Zinkkomponente wird vorzugsweise ausgewählt aus der Gruppe Zinkoxid, Zinkhydroxid, Zinkhydroxidcarbonat.

Bevorzugte Zusammensetzungen des erfindungsgemäß verwendeten Bindemittels sind in Gew.-% Folgende:

| | |
|---|---|
| Calciumsulfoaluminatklinkermehl: | 90 bis 99,98, insbesondere 97 bis 99,8 |
| Anregerkomponente | : 0,01 bis 5, insbesondere 0,1 bis 1 |
| Zinkkomponente | : 0,01 bis 5, insbesondere 0,1 bis 2 |

Die Erfindung betrifft zudem die Verwendung eines mineralischen, hydraulischen Werktrockenmörtels auf Basis eines oder mehrerer der oben angegebenen Bindemittel in einem Frischmörtel oder einem Frischbeton, wobei der Werktrockenmörtel gekennzeichnet ist durch die folgenden Zusammensetzungen in Gew.-%:

| | |
|---|---|
| Erfindungsgemäßes verwendetes Bindemittel: | 5 bis 95, insbesondere 10 bis 90 |
| Zuschlagstoff: | 5 bis 95, insbesondere 10 bis 90 |
| Zusatzstoff: | 0 bis 50, insbesondere 1 bis 40 |
| Verdickungsmittel: | 0 bis 5, insbesondere 0,1 bis 4 |
| Redispergierbares Polymerpulver: | 0 bis 5, insbesondere 1 bis 3 |
| Erstarrungsverzögerer: | 0 bis 3, insbesondere 0,1 bis 2 |
| Erhärtungsverzögerer: | 0 bis 4, insbesondere 0,1 bis 2 |
| Erstarrungsbeschleuniger: | 0 bis 6, insbesondere 0,1 bis 5 |
| Erhärtungsbeschleuniger: | 0 bis 6, insbesondere 0,1 bis 5 |
| Fließmittel: | 0 bis 4, insbesondere 0,1 bis 2 |

Dabei werden die Zusammensetzungen so zusammengestellt, dass ein mit dem Trockenmörtel angemachter Frischmörtel bei Frost und Plustemperaturen abbindet, erstarrt und erhärtet.

Besonders vorteilhaft ist, wenn als Erstarrungsverzögerer eine Fruchtsäure verwendet wird, und zwar insbesondere aus der Gruppe Weinsäure, Zitronensäure, Oxalsäure.

Des Weiteren ist vorteilhaft, wenn die redispergierbaren Polymerpulver Polymerisate sind auf Basis von einem oder mehreren Monomeren aus der Gruppe umfassend Vinylester von unverzweigten oder verzweigten Alkylcarbonsäuren mit 1 bis 15 C-Atomen, Methacrylsäureester und Acrylsäureester von Alkoholen mit 1 bis 10 C-Atomen, Vinylaromaten, Olefine, Diene und Vinylhalogenide.

## Patentansprüche

1. Verwendung eines mineralischen, hydraulischen Bindemittels in Pulverform in einer Frischmasse, um zu gewährleisten, dass die Frischmasse bei Frost ebenso abbindet, erstarrt und erhärtet wie bei Plustemperaturen und dabei vergleichbare oder nur unbedeutend geringere Frühfestigkeiten und Endfestigkeiten erbringt, wobei meist sogar die Erstarrungs- und Erhärtungsdauer gleich oder nahezu gleich ist,
**dadurch gekennzeichnet, dass**
das Bindemittel auf einem Calciumsulfoaluminat-Klinkermehl basiert, und zugesetzt mindestens eine in dem wässrigen Milieu der Frischmasse alkalisch wirkende Anregerkomponente für die hydraulische Reaktion des Calciumsulfoaluminats des Klinkermehls und mindestens eine Zinkionen in dem wässrigen Milieu der Frischmasse freisetzende Zinkkomponente enthält.

2. Verwendung nach Anspruch 1,
**dadurch gekennzeichnet, dass**
die Anregerkomponente ausgewählt ist aus der Gruppe Erdalkalisulfate, Erdalkalihydroxide, Alkalisulfate, Alkalihydroxide.

3. Verwendung nach Anspruch 1 oder 2,
**dadurch gekennzeichnet, dass**
die Zinkkomponente ausgewählt ist aus der Gruppe Zinkoxid, Zinkhydroxid, Zinkhydroxidcarbonat.

4. Verwendung nach einem oder mehreren der vorhergehenden Ansprüche,
**dadurch gekennzeichnet, dass**
das Bindemittel die folgenden Zusammensetzungen in Gew.-% aufweist:
| | |
|---|---|
| Calciumsulfoaluminatklinkermehl: | 90 bis 99,98, insbesondere 97 bis 99,8 |
| Anregerkomponente: | 0,01 bis 5, insbesondere 0,1 bis 1 |
| Zinkkomponente: | 0,01 bis 5, insbesondere 0,1 bis 2 |

5. Verwendung nach einem oder mehreren der vorhergehenden Ansprüche,
**dadurch gekennzeichnet, dass**
das Bindemittel mindestens einen Erstarrungsverzögerer für das Calciumsulfoaluminat aufweist.

6. Verwendung nach Anspruch 5,
**dadurch gekennzeichnet, dass**
das Bindemittel mindestens eine erstarrungsverzögernde Fruchtsäure und/oder mindestens ein erstarrungsverzögerndes Polyphosphat aufweist.

7. Verwendung nach einem der vorhergehenden Ansprüche,
**dadurch gekennzeichnet, dass**
das Bindemittel in einem mineralischen Frischmörtel aufweisend mindestens einen Zuschlagstoff und optional Zusatzstoffe und Zusatzmittel, verwendet wird.

8. Verwendung nach einem der Ansprüche 1 bis 6,
**dadurch gekennzeichnet, dass**
das Bindemittel in einem mineralischen Frischbeton aufweisend mindestens einen Zuschlagstoff und optional Zusatzstoffe und Zusatzmittel, verwendet wird.

9. Verwendung nach Anspruch 7 oder 8,
**dadurch gekennzeichnet, dass**
in dem Frischmörtel oder dem Frischbeton ein mineralischer, hydraulischer Werktrockenmörtel auf Basis des Bindemittels mit den folgenden Zusammensetzungen in Gew.-% verwendet wird:
| | |
|---|---|
| Bindemittel: | 5 bis 95 |
| Zuschlagstoff: | 5 bis 95 |
| Zusatzstoff: | 0 bis 50 |
| Verdickungsmittel: | 0 bis 5 |
| Redispergierbares Polymerpulver: | 0 bis 5 |
| Erstarrungsverzögerer: | 0 bis 3 |
| Erhärtungsverzögerer: | 0 bis 4 |
| Erstarrungsbeschleuniger: | 0 bis 6 |
| Erhärtungsbeschleuniger: | 0 bis 6 |
| Fließmittel: | 0 bis 4 |

10. Verwendung nach Anspruch 9,
**dadurch gekennzeichnet, dass**
ein Werktrockenmörtel mit den folgenden Zusammensetzungen in Gew.-% verwendet wird:
| | |
|---|---|
| Bindemittel: | 10 bis 90 |
| Zuschlagstoff: | 10 bis 90 |
| Zusatzstoff: | 1 bis 40 |
| Verdickungsmittel: | 0,1 bis 4 |
| Redispergi erbares Polymerpulver: | 1 bis 3 |
| Erstarrungsverzögerer: | 0,1 bis 2 |
| Erhärtungsverzögerer: | 0,1 bis 2 |
| Erstarrungsbeschleuniger: | 0,1 bis 5 |
| Erhärtungsbeschleuniger: | 0,1 bis 5 |
| Fließmittel: | 0,1 bis 2 |

11. Verwendung nach Anspruch 9 und/oder 10,
**dadurch gekennzeichnet, dass**
der Erstarrungsverzögerer eine Fruchtsäure ist und insbesondere ausgewählt ist aus der Gruppe Weinsäure, Zitronensäure, Oxalsäure.

12. Verwendung nach einem oder mehreren der Ansprüche 9 bis 11,
**dadurch gekennzeichnet, dass**
die redispergierbaren Polymerpulver Polymerisate sind auf Basis von einem oder mehreren Monomeren aus der Gruppe umfassend Vinylester von unverzweigten oder verzweigten Alkylcarbonsäuren mit 1 bis 15 C-Atomen, Methacrylsäureester und Acrylsäureester von Alkoholen mit 1 bis 10 C-Atomen, Vinylaromaten, Olefine, Diene und Vinylhalogenide.

## Claims

1. Use of a mineral, hydraulic binder in powder form in a fresh composition in order to ensure that the fresh mass likewise sets, solidifies and cures at subzero temperatures as in the case of positive temperatures and results in comparable or only insignificantly lower early strengths and final strengths, with the solidification and curing time usually also being the same or virtually the same,
**characterized in that**
the binder is based on a ground calcium sulfoaluminate clinker and contains as additive at least one activator component for the hydraulic reaction of the calcium sulfoaluminate of the ground clinker, which activator component has an alkaline reaction in the aqueous medium of the fresh composition, and at least one zinc component which liberates zinc ions in the aqueous medium of the fresh composition.

2. Use according to Claim 1,
**characterized in that**
the activator component is selected from the group consisting of alkaline earth metal sulfates, alkaline earth metal hydroxides, alkali metal sulfates, alkali metal hydroxides.

3. Use according to Claim 1 or 2,
**characterized in that**
the zinc component is selected from the group consisting of zinc oxide, zinc hydroxide, zinc hydroxide carbonate.

4. Use according to one or more of the preceding claims,
**characterized in that**
the binder has the following composition in % by weight:
| | |
|---|---|
| ground calcium | from 90 to 99.98, in |
| sulfoaluminate clinker: | particular from 97 to 99.8, |
| activator component: | from 0.01 to 5, in particular from 0.1 to 1 |
| zinc component: | from 0.01 to 5, in particular from 0.1 to 2. |

5. Use according to one or more of the preceding claims,
**characterized in that**
the binder comprises at least one setting retarder for the calcium sulfoaluminate.

6. Use according to Claim 5,
**characterized in that**
the binder comprises at least one setting-retarding fruit acid and/or at least one setting-retarding polyphosphate.

7. Use according to any of the preceding claims,
**characterized in that**
the binder is used in a mineral fresh mortar comprising at least one aggregate and optionally additives and admixtures.

8. Use according to any of Claims 1 to 6,
**characterized in that**
the binder is used in a mineral fresh concrete comprising at least one aggregate and optionally additives and admixtures.

9. Use according to Claim 7 or 8,
**characterized in that**
a mineral, hydraulic factory dry mortar based on the binder having the following compositions in % by weight:
| | |
|---|---|
| binder: | from 5 to 95 |
| aggregate: | from 5 to 95 |
| additive: | from 0 to 50 |
| thickener: | from 0 to 5 |
| redispersible polymer powder: | from 0 to 5 |
| setting retarder: | from 0 to 3 |
| curing retarder: | from 0 to 4 |
| setting accelerator: | from 0 to 6 |
| curing accelerator: | from 0 to 6 |
| plasticizer: | from 0 to 4 |
is used in the fresh mortar or the fresh concrete.

10. Use according to Claim 9,
**characterized in that** a factory dry mortar having the following compositions in % by weight is used:
| | |
|---|---|
| binder: | from 10 to 90 |
| aggregate: | from 10 to 90 |
| additive: | from 1 to 40 |
| thickener: | from 0.1 to 4 |
| redispersible polymer powder: | from 1 to 3 |
| setting retarder: | from 0.1 to 2 |
| curing retarder: | from 0.1 to 2 |
| setting accelerator: | from 0.1 to 5 |
| curing accelerator: | from 0.1 to 5 |
| plasticizer: | from 0.1 to 2 |
is used.

11. Use according to Claim 9 and/or 10,
**characterized in that**
the setting retarder is a fruit acid and is in particular selected from the group consisting of tartaric acid, citric acid, oxalic acid.

12. Use according to one or more of Claims 9 to 11,
**characterized in that**
the redispersible polymer powders are polymers based on one or more monomers from the group consisting of vinyl esters of unbranched or branched alkylcarboxylic acids having from 1 to 15 carbon atoms, methacrylic esters and acrylic esters of alcohols having from 1 to 10 carbon atoms, vinylaromatics, olefins, dienes and vinyl halides.

## Revendications

1. Utilisation d'un liant hydraulique minéral sous une forme de poudre dans une masse fraîche pour garantir que la masse fraîche se lie, se solidifie et durcit en présence de gel également tout comme à des températures positives et offre dans ce cadre des résistances à court terme et des résistances finales comparables ou, seulement de manière insignifiante, inférieures, dans laquelle la plupart du temps même la durée de solidification et de durcissement est identique ou quasiment identique,
**caractérisée en ce que**
le liant est à base d'une poudre fine de clinker de sulfoaluminate de calcium, à laquelle ont été ajoutés au moins un composant d'activation à effet alcalin dans le milieu aqueux de la masse fraîche pour la réaction hydraulique du sulfoaluminate de calcium de la poudre fine de clinker et au moins un composant à base de zinc libérant des ions de zinc dans le milieu aqueux de la masse fraîche.

2. Utilisation selon la revendication 1,
**caractérisée en ce que**
le composant d'activation est choisi parmi le groupe constitué des sulfates alcalino-terreux, des hydroxydes alcalino-terreux, des sulfates alcalins, des hydroxydes alcalins.

3. Utilisation selon la revendication 1 ou 2,
**caractérisée en ce que**
le composant de zinc est choisi parmi le groupe constitué de l'oxyde de zinc, de l'hydroxyde de zinc, de l'hydroxycarbonate de zinc.

4. Utilisation selon l'une quelconque ou plusieurs des revendications précédentes,
**caractérisée en ce que**
le liant présente les compositions suivantes en % en poids :
poudre fine de clinker de sulfoaluminate de calcium : 90 à 99,98, en particulier 97 à 99,8
composant d'activation : 0,01 à 5, en particulier 0,1 à 1
composant à base de zinc : 0,01 à 5, en particulier 0,1 à 2.

5. Utilisation selon l'une quelconque ou plusieurs des revendications précédentes,
**caractérisée en ce que**
le liant présente au moins un retardateur de solidification pour le sulfoaluminate de calcium.

6. Utilisation selon la revendication 5,
**caractérisée en ce que**
le liant présente au moins un acide de fruits retardant la solidification et/ou au moins un polyphosphate retardant la solidification.

7. Utilisation selon l'une quelconque des revendications précédentes,
**caractérisée en ce que**
le liant est utilisé dans un mortier frais minéral présentant au moins un granulat et en option des additifs et des adjuvants.

8. Utilisation selon l'une quelconque des revendications 1 à 6,
**caractérisée en ce que**
le liant est utilisé dans un béton frais minéral présentant au moins un granulat et en option des additifs et des adjuvants.

9. Utilisation selon la revendication 7 ou 8,
**caractérisée en ce que**
est utilisé, dans le mortier frais ou le béton frais, un mortier sec prêt à l'emploi hydraulique minéral à base du liant avec les compositions suivantes en % en poids :
| | |
|---|---|
| liant : | 5 à 95 |
| granulat : | 5 à 95 |
| additif : | 0 à 50 |
| épaississant : | 0 à 5 |
| poudre de polymère redispersible : | 0 à 5 |
| retardateur de solidification : | 0 à 3 |
| retardateur de durcissement : | 0 à 4 |
| accélérateur de solidification : | 0 à 6 |
| accélérateur de durcissement : | 0 à 6 |
| agent d'écoulement : | 0 à 4 |

10. Utilisation selon la revendication 9,
**caractérisée en ce que**
un mortier sec prêt à l'emploi avec les compositions suivantes en % en poids est utilisé :
| | |
|---|---|
| liant : | 10 à 90 |
| granulat : | 10 à 90 |
| additif : | 1 à 40 |
| épaississant: | 0,1 à 4 |
| poudre de polymère redispersible : | 1 à 3 |
| retardateur de solidification : | 0,1 à 2 |
| retardateur de durcissement | 0,1 à 2 |
| accélérateur de solidification : | 0,1 à 5 |
| accélérateur de durcissement : | 0,1 à 5 ; |
| agent d'écoulement : | 0,1 à 2. |

11. Utilisation selon la revendication 9 et/ou 10,
**caractérisée en ce que**
le retardateur de solidification est un acide de fruits et est choisi en particulier parmi le groupe acide tartrique, acide citrique, acide oxalique.

12. Utilisation selon l'une quelconque ou plusieurs des revendications 9 à 11,
**caractérisée en ce que**
les poudres de polymère redispersibles sont des polymérisats à base d'un ou de plusieurs monomères issus du groupe comprenant des vinylesters d'acides alkylcarboxyliques non ramifiés ou ramifiés avec 1 à 15 atomes de C, des esters d'acide méthacrylique et des esters d'acide acrylique d'alcools avec 1 à 10 atomes de C, des vinylaromatiques, des oléfines, des diènes et des halogénures de vinyle.
